# EUROPÄISCHE PATENTSCHRIFT

(11) **EP 2 150 924 B1**
(45) Veröffentlichungstag und Bekanntmachung des Hinweises auf die Patenterteilung: **07.12.2016**
(21) Anmeldenummer: 08773361.4
(22) Anmeldetag: 04.06.2008
(51) Int. Cl.: G06K 19/077

(54) **Verfahren zur Herstellung einer selbstklebenden RFID-Antenne**
Method for production of self-adhesive RFID-Antenna
Procédé de réalisation d'une antenne auto-collante pour système RFID

(30) Priorität: 06.06.2007 DE 102007026720
(43) Veröffentlichungstag der Anmeldung: 10.02.2010
(73) Patentinhaber: bielomatik Leuze GmbH + Co. KG, 72639 Neuffen (DE)
(72) Erfinder: BOHN, Martin, 72762 Reutlingen (DE)
(74) Vertreter: Greif, Thomas
(86) Internationale Anmeldenummer: PCT/EP2008/004432
(87) Internationale Veröffentlichungsnummer: WO 2008/148527

(56) Entgegenhaltungen:
- EP-A2- 1 977 478
- WO-A-01/73800
- WO-A-98/56019
- WO-A1-99/48071
- US-A1- 2002 025 416

## Beschreibung

Die Erfindung bezieht sich auf ein Verfahren zur Herstellung einer selbstklebenden Antenne für ein RFID-System.

Bekannterweise enthalten RFID-Systeme einen Transponder, der aus einem RFID-Chip und einer RFID-Antenne besteht. RFID-Etiketten werden bekannterweise so hergestellt, dass ein sogenanntes RFID-Inlay mit einem Transponder zwischen einem bahnförmigen, auf der Unterseite mit einer Haftkleberschicht versehenen Deckmaterial und einem ebenfalls bahnförmigen Trägermaterial angeordnet ist, das von der Haftkleberschicht abziehbar ist. Das RFID-Inlay enthält dabei einen auf einer flachen Antenne befestigten und mit diesem elektrisch verbundenen RFID-Chip, wobei die RFID-Antenne auf einer Antennenfolie angeordnet ist.

Es sind verschiedene Verfahren bekannt, die RFID-Antennen herzustellen: Nach einem Verfahren wird die Antennenkontur aus einer Folie ausgeätzt. Dieses Verfahren ist langsam, teuer und umweltbelastend. Alternativ kann die Antennenkontur direkt durch Metallisieren auf ein entsprechend gestaltetes Bahnmaterial aufgebracht werden. Ebenso wurde bereits vorgeschlagen, die Antennen durch Aufdrucken mit einer leitfähigen Farbe, beispielsweise Silberleitfarbe, herzustellen. Auch dieses Verfahren ist teuer und - soweit die Farben Schwermetalle enthalten - umweltbelastend. Als bahnförmiges Substrat, auf das die flachen Antennen aufgebracht werden, wird meistens PET verwendet. Dieses ist nichts recyclefähig. WO 01/73800 offenbart ein bekanntes Verfahren zur Herstellung eines RFID-Etiketts.

Der Erfindung liegt daher die Aufgabe zugrunde, ein Herstellungsverfahren für eine Antenne für ein RFID-System
bereitzustellen, die aus gut recyclebaren Material bei verminderten Kosten herstellbar ist.

Diese Aufgabe wird mit den Merkmalen des Patentanspruchs 1 gelöst. Nach der Erfindung wird die Antenne aus einer Aluminiumfolie von geringer Stärke zwischen 1 µm und 20 µm, bevorzugt von ca. 10 µm, hergestellt. Aluminiumfolien dieser Stärke werden als Massenware, beispielsweise für Haushaltsfolien, hergestellt. Als Trägermaterialien werden bevorzugt Papiere verwendet, die ebenfalls gut recyclebar sind.

Die zu Rollen aufgewickelte Aluminiumfolie läßt sich in RFID-Maschinen zur Herstellung von RFID-Etiketten mit rotativ arbeitenden Werkzeugen vereinfacht weiterverarbeiten. Es kann so vereinfacht eine elektrisch optimierte UHF-Antenne hergestellt werden. Der Patentanspruch 1 enthält das Grundverfahren zur
Herstellung eines erfindungsgemäßen selbstklebenden RFID-Etikettes. Die Patentansprüche 2 bis 6 beanspruchen verschiedene, vorteilhafte Varianten des Herstellungsverfahrens für verschiedene Einsatzzwecke.

Die Zeichnungen dienen zur Erläuterung der Erfindung anhand vereinfacht dargestellter Ausführungsbeispiele.
Figur 1 zeigt den Schnitt durch eine selbstklebende Antenne.
Die Figuren
   2 bis 6 zeigen verschiedene Verfahren zur Herstellung von Antennen.
Figur 7 zeigt einen Ausschnitt von einem bahnförmigen Trägermaterial mit
   einer Reihe von aufgeklebten Antennen.

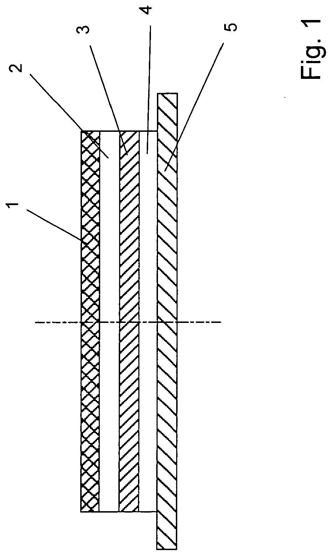

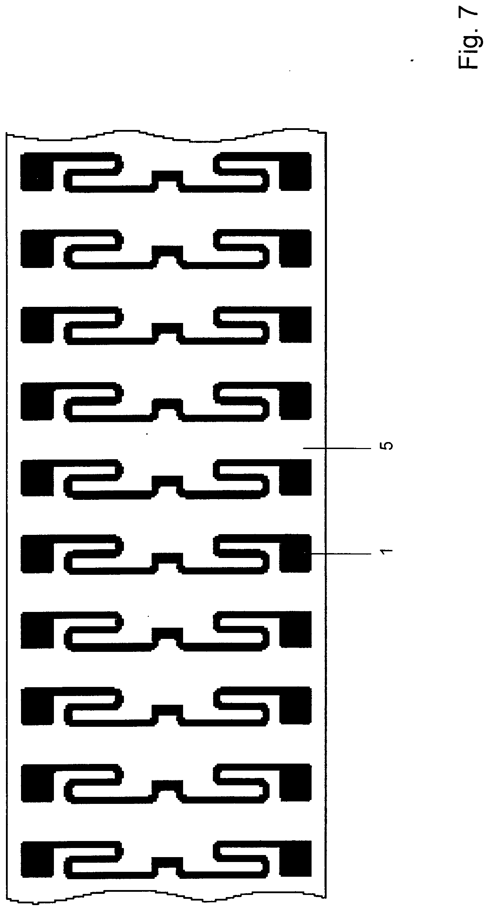

Die in Figur 1 im Schnitt und in Figur 7 in Draufsicht dargestellten Antennen sind zur Verwendung in einem RFID-System, insbesondere für ein RFID-Etikett vorgesehen. Selbstklebende RFID-Etiketten enthalten bekannterweise ein RFID-Inlay, bei dem auf ein bahn- oder bogenförmiges Material ein RFID-Chip und eine RFID-Antenne aufgeklebt sind. Ein derartiges RFID-Etikett und ein Verfahren zu seiner Herstellung sind beispielsweise in der WO 2005/076206 A1 beschrieben.

Die als UHF-Antenne verwendbare Antenne 1 ist aus einer dünnen Aluminiumfolie ausgestanzt, die eine Stärke von 1 µm bis 20 µm, insbesondere von ca. 10 µm, aufweist. Mittels einer Klebeschicht 2 ist die Antenne 1 auf die Vorderseite eines bahn- oder bogenförmigen Haftmaterials 3 aufgeklebt, das bevorzugt aus Papier besteht. Auf seiner Rückseite ist das Haftmaterial 3 mit einer Haftkleberschicht 4 versehen. Die Haftkleberschicht 4 wird von einem bahn- oder bogenförmigen Trägermaterial 5 abgedeckt, das abziehbar aufgeklebt ist. Als Trägermaterial 5 wird bevorzugt silikonisiertes Papier verwendet. Die Haftklebeschicht 4 haftet stärker an dem Haftmaterial 3 als an dem Trägermaterial 5, so dass nach dem Abziehen des Trägermaterials 5 eine Klebeschicht an der Rückseite des Haftmaterials 3 verbleibt. Mittels dieser Klebeschicht kann eine auf dem Haftmaterial 3 klebende Antenne 1 auf einem Material, beispielsweise auf einem Inlay-Material festgeklebt werden.

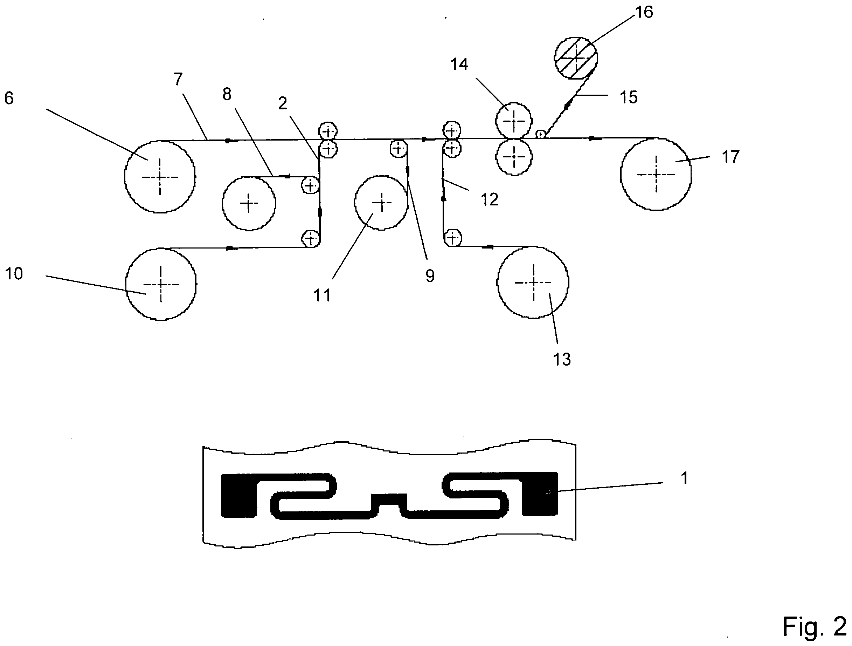

In den Figuren 2 bis 4 werden drei Herstellungsverfahren für die selbstklebenden Antennen 1 hergestellt, bei denen als Antennenmaterial Aluminiumfolie mit einer Stärke zwischen 10 µm und 20 µm, bevorzugt ca. 10 µm, in Bahnform von einer Rolle 6 abgezogen wird. Die Rückseite der abgezogenen Aluminiumfolie 7 wird anschließend mit der Klebeschicht 2 versehen. Bei dem Verfahren nach Figur 2 erfolgt das Auftragen der Klebeschicht 2 in Form eines Transferklebers. Bei einem Transferkleber ist die Klebeschicht auf beiden Seiten von einem Deckmaterial 8 und einem Trägermaterial 9 abgedeckt. Der Transferkleber wird von einer Rolle 10 abgezogen und an die Rückseite der Aluminiumfolie 7 geführt, wobei vor dem Kontakt mit der Aluminiumfolie 7 das Deckmaterial 8 abgezogen. Im Kontakt mit der Aluminiumfolie 7 gibt der Transferkleber seine Klebeschicht 2 an die Folie 7 ab, anschließend wird das Trägermaterial 9 des Transferklebers ebenfalls abgezogen und zu einer Rolle 11 aufgewickelt. Es liegt nun eine Aluminiumfolie 7 mit einer Klebeschicht 2 vor. Auf die Klebeschicht 2 wird anschließend ein bahn- oder bogenförmiges Selbstklebematerial 12 aufgeklebt, das dazu von einer Rolle 13 abgezogen wird. Das Selbstklebematerial 12 besteht aus dem Haftmaterial 3 als Deckschicht, das an seiner Rückseite mit der Haftkleberschicht 4 versehen ist, die wiederum von dem Trägermaterial 5 abgedeckt ist.

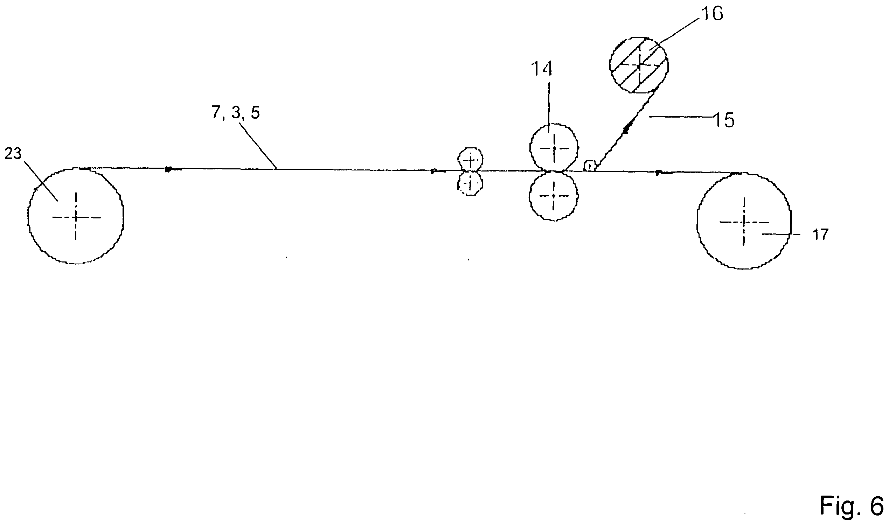

Das Verbundmaterial aus Trägermaterial 5, Haftmaterial 3 und Aluminiumfolie 1 mit dazwischen angeordneten Klebeschichten 2, 4 wird anschließend durch eine Rotationsstanze 14 geführt. Von der Rotationsstanze 14 wird die Aluminiumfolie 7 mit dem Haftmaterial 3 zu einzelnen Antennen 1 ausgestanzt. Das Stanzgitter 15 aus der restlichen Aluminiumfolie 7 und dem restlichen Haftmaterial 3 wird anschließend abgezogen und als recyclebarer Abfall zu einer Rolle 16 aufgewickelt. Die Antennen 1 mit dem darunter befindlichen, ebenfalls in Antennenform ausgestanzten Haftmaterial 3, verbleiben auf dem bahnförmigen Trägermaterial 5 und werden anschließend mit diesem zu einer Rolle 17 aufgewickelt. Die Rolle 17 enthält somit die in Figur 6 dargestellte Reihe von einzelnen Antennen 1, die mit dem Haftmaterial 3 verklebt sind und mit diesem abziehbar auf dem Trägermaterial 5 aufgeklebt sind.

Da die dünne Aluminiumfolie 7 mit dem auf der Rückseite aufgeklebten Haftmaterial 3 verstärkt ist, ist es möglich, die einzelne Antenne 1 auszustanzen und auch das Stanzgitter 5 abzuziehen, ohne dass die Aluminiumfolie reißt. Es läßt sich so eine extrem dünne, billige Aluminiumfolie als Antennenmaterial verwenden. Zugleich ist es möglich, das Antennenmaterial in Rollenform als Ausgangsmaterial zu verwenden und auf den bekannten Maschinen zur Verarbeitung von bahnförmigem Material mit rotativ arbeitenden Werkzeugen zu verwenden. Aluminium als Antennenmaterial ist lebensmittel- und arzneiverträglich und zum Einsatz als UHF-Antenne elektrisch gut leitfähig.

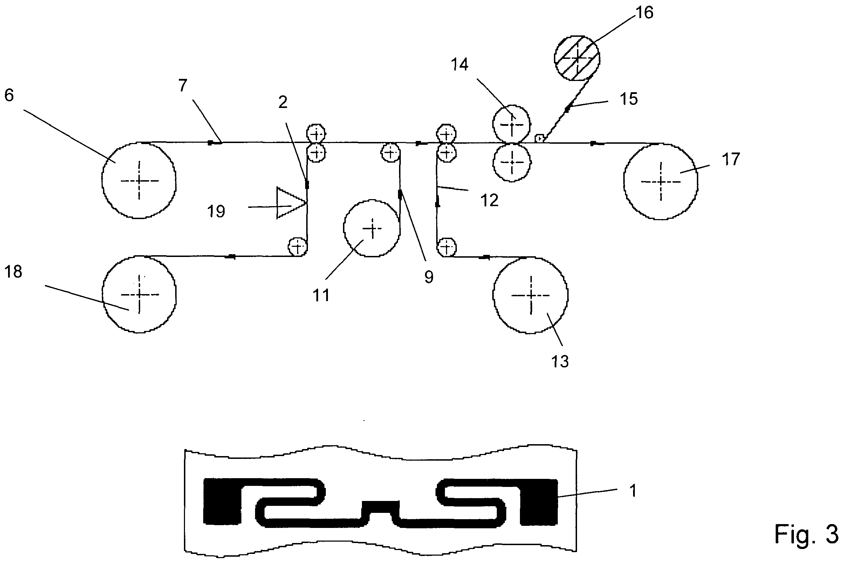

Das in Figur 3 dargestellte Verfahren entspricht dem vorstehend beschriebenen nach Figur 1 mit der Ausnahme, dass die Klebeschicht auf der Rückseite der Aluminiumfolie 7 anders bereitgestellt wird. Dazu wird ein Trägermaterial aus Silikonpapier von einer Rolle 18 abgezogen und zunächst an seiner Oberseite mittels eines von einer Breitschlitzdüse 19 aufgetragenen Hot-Melts mit der Klebeschicht 2 versehen. Die Klebeschicht 2 wird dann auf die vorstehend beschriebene Weise auf die Rückseite der Aluminiumfolie 7 übertragen. Dabei wird das Trägermaterial 9 wieder von der Aluminiumfolie 7 abgezogen und zu einer Rolle 11 aufgewickelt.

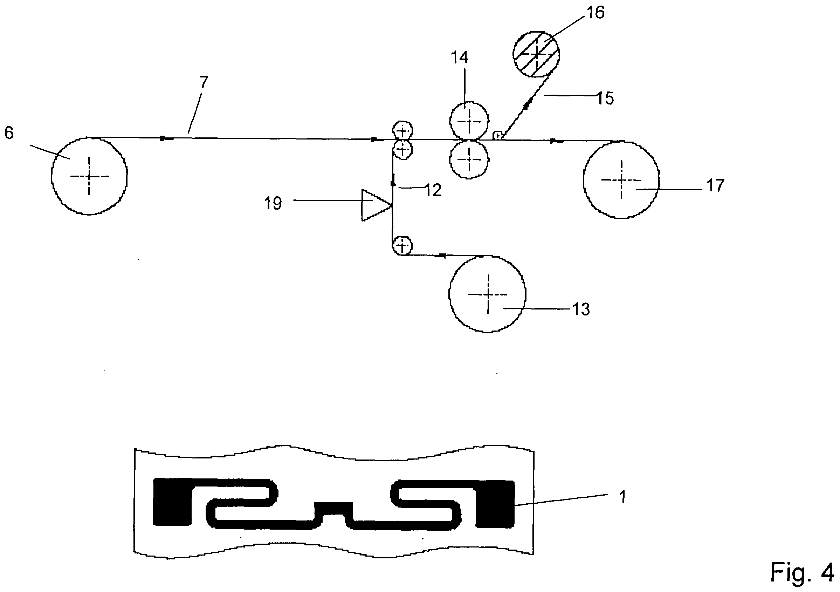

Bei dem Verfahren nach Figur 4 erfolgt der Auftrag der Klebeschicht 2 zunächst auf die Oberseite der Deckschicht des Selbstklebematerials 12, bevor dieses mit der Aluminiumfolie 7 verbunden wird. Der Auftrag erfolgt ebenfalls mittels einer Breitschlitzdüse 19 als Hot-Melt-Auftrag. Bei dieser Variante dient die Deckschicht des Selbstklebematerials 12 zugleich als Haftmaterialschicht 3.

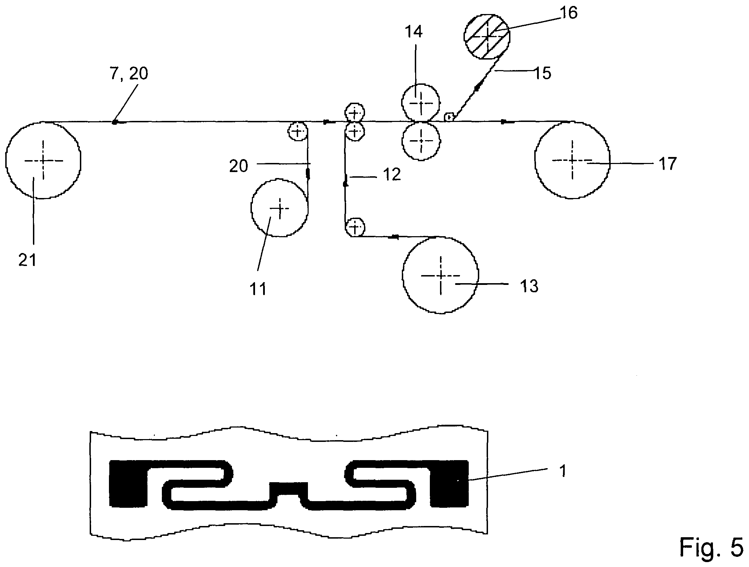

In Figur 5 ist eine Variante dargestellt, bei der als Ausgangsmaterial ein Verbundmaterial aus Aluminiumfolie 7 und einem Silikonträgermaterial 20 verwendet wird, wobei das Trägermaterial 20 abziehbar auf die Rückseite der Aluminiumfolie 7 aufgeklebt ist. Beim Abziehen des Trägermaterials 20 verbleibt die Klebeschicht 2 auf der Rückseite der Aluminiumfolie. Das Verbundmaterial 7, 20 wird von einer Rolle 21 abgezogen, anschließend wird das Trägermaterial 20 entfernt und zu einer Rolle 22 aufgewickelt. Es liegt nun eine Aluminiumfolie 7 mit einer Klebeschicht 2 auf der Rückseite vor, die auf die bei den vorherigen Ausführungsbeispielen beschriebene Weise zunächst mit einem Selbstklebematerial 12 verbunden wird, bevor die Antennen 1 ausgestanzt werden

In Figur 6 ist eine Variante dargestellt, bei der als Ausgangsmaterial ein bahnförmiges Verbundmaterial bestehend aus einer Aluminiumfolie 7, einem Haftklebermaterial 3 und einem Silikonträgermaterial 5 verwendet wird. Die Aluminiumfolie ist auf die Vorderseite des Haftmaterials 3 aufgeklebt, und das Trägermaterial 5 ist abziehbar auf die Rückseite der Aluminiumfolie 7 aufgeklebt. Beim Abziehen des Trägermaterials 5 verbleibt die Klebeschicht 2 auf der Rückseite des Haftmaterials 3. Das Verbundmaterial 7, 3, 5 wird von einer Rolle 23 abgezogen, anschließend werden die Antennen 1 ausgestanzt. Bevorzugt erfolgt das Stanzen auch durch das Haftmaterial 3. Es werden so eine mit dem Haftmaterial 3 verstärkte Antennenstruktur und ein entsprechend verstärktes Stanzgitter 15 hergestellt. Nach dem Stanzen wird das restliche Stanzgitter 15 mit der restlichen Aluminiumfolie 7 und ggf. mit dem restlichen Haftmaterial 3 abgezogen und zu einer Rolle 16 aufgewickelt Der Silikonträger 5 mit den aufgeklebten und von dem Haftmaterial 3 verstärkten Antennen 1 wird anschließend zu einer Rolle 17 aufgewickelt.

## Patentansprüche

1. Verfahren zur Herstellung einer selbstklebenden Antenne für ein RFID-System, insbesondere für ein RFID-Etikett, wobei die Antenne (1) aus einer Aluminiumfolie (7) einer Stärke von 1 µm - 20 µm, insbesondere ca. 10 µm, auf die Vorderseite eines Haftmaterials (3) aufgeklebt und ausgestanzt ist, wobei das Haftmaterial (3) auf seiner Rückseite mit einer Haftkleberschicht (4) versehen ist, **dadurch gekennzeichnet, dass** einzelne Antennen (1) aus einer auf der Vorderseite eines bahnförmigen Haftmaterials (3) aufgeklebten Aluminiumfolie (7) ausgestanzt werden, wobei das Haftmaterial (3) an seiner Rückseite eine Haftkleberschicht (4) aufweist und nach dem Ausstanzen das restliche Stanzgitter (15) mit der restlichen Aluminiumfolie abgezogen wird, mit folgenden Schritten:
1. Von einer Rolle (6, 21) wird eine bahnförmige Aluminiumfolie (7) abgezogen,
2. die Aluminiumfolie (7) wird auf ihrer Rückseite mit einer Klebeschicht (2) versehen,
3. auf die Klebeschicht (2) wird ein bahnförmiges Haftmaterial (3) aufgeklebt, das auf seiner Rückseite eine Haftkleberschicht (4) aufweist,
4. danach werden aus der Aluminiumfolie (7) einzelne Antennen (1) ausgestanzt, und
5. das restliche Stanzgitter (15) aus Aluminiumfolie (7) wird abgezogen.

2. Verfahren nach Anspruch 1, **dadurch gekennzeichnet, dass** ein Haftmaterial (3) auf die Rückseite der Aluminiumfolie (7) aufgeklebt wird, das an seiner abgewandten Rückseite von einem abziehbar aufgeklebten Trägermaterial (5) abgedeckt ist und das beim Stanzen der die Aluminiumfolie (7) mit dem Haftmaterial (3) ausgestanzt wird und so Antennen (1) mit in Antennenform ausgestanzten Haftmaterial (2) auf dem Trägermaterial (5) verbleiben.

3. Verfahren nach Anspruch 2, **dadurch gekennzeichnet, dass** die Klebeschicht (2) in Form eines Transferklebers auf die Rückseite der Aluminiumfolie (7) aufgetragen wird.

4. Verfahren nach einem der Ansprüche 1 bis 3, **dadurch gekennzeichnet, dass** die Klebeschicht (2) zunächst auf ein bahnförmiges Trägermaterial (18) aufgetragen und anschließend von diesem an die Rückseite der Aluminiumfolie (7) übergeben wird.

5. Verfahren nach einem der Ansprüche 1 bis 4, **dadurch gekennzeichnet, dass** auf die Rückseite der Aluminiumfolie vor dem Stanzen ein Selbstklebematerial (12) aufgetragen wird, wobei auf die als Haftmaterial (3) dienende Deckschicht des Selbstklebematerials (12) die Klebschicht (2) vor dem Zusammenführen mit der Aluminiumfolie (7) aufgetragen wird.

6. Verfahren nach einem der Ansprüche 1 bis 5, **dadurch gekennzeichnet, dass** als Ausgangsmaterial ein Verbundmaterial aus Aluminiumfolie (7) und einem Trägermaterial (20) verwendet wird, das abziehbar auf die Rückseite der Aluminiumfolie (7) aufgeklebt ist, wobei nach dem Abziehen die Klebeschicht (2) auf der Aluminiumfolie (7) verbleibt.

## Claims

1. Method for producing a self-adhesive antenna for an RFID system, more particularly for an RFID label, the antenna (1), composed of an aluminium foil (7) in a thickness of 1 µm - 20 µm, more particularly about 10 µm, being adhered to the facing side of an attachment material (3) and die-cut, the attachment material (3) being provided on its reverse side with a layer (4) of pressure-sensitive adhesive, **characterized in that** individual antennas (1) are die-cut from an aluminium foil (7) adhered to the facing side of an attachment material (3) in web form, the attachment material (3) having on its reverse side a layer (4) of pressure-sensitive adhesive, and the residual die-cutting matrix (15) with the remaining aluminium foil being stripped off after die-cutting, comprising the following steps:
1. an aluminium foil (7) in web form is taken off from a roll (6, 21),
2. the aluminium foil (7) is provided on its reverse side with an adhesive layer (2),
3. an attachment material (3) in web form is adhered to the adhesive layer (2), said material (3) having a layer (4) of pressure-sensitive adhesive on its reverse side,
4. thereafter individual antennas (1) are die-cut from the aluminium foil (7), and
5. the residual die-cutting matrix (15) of aluminium foil (7) is stripped off.

2. Method according to Claim 1, **characterized in that** an attachment material (3) is adhered to the reverse side of the aluminium foil (7), said material (3) being lined on its remote reverse side by a peelably adhered carrier material (5) and which is die-cut with the attachment material (3) when the the aluminium foil (7) is die-cut, so leaving antennas (1) having attachment material (2) die-cut in antenna form on the carrier material (5).

3. Method according to Claim 2, **characterized in that** the adhesive layer (2) is applied in the form of a transfer adhesive to the reverse side of the aluminium foil (7).

4. Method according to any of Claims 1 to 3, **characterized in that** the adhesive layer (2) is first applied to a carrier material (18) in web form and is subsequently transferred from said material (18) onto the reverse side of the aluminium foil (7).

5. Method according to any of Claims 1 to 4, **characterized in that** a self-adhesive material (12) is applied to the reverse side of the aluminium foil prior to die-cutting, the adhesive layer (2) being applied to the top layer of the self-adhesive material (22), serving as attachment material (3), before being combined with the aluminium foil (7).

6. Method according to any of Claims 1 to 5, **characterized in that** a composite material is used as starting material, composed of aluminium foil (7) and a carrier material (20) which is adhered peelably to the reverse side of the aluminium foil (7), the adhesive layer (2) remaining on the aluminium foil (7) after peeling has taken place.

## Revendications

1. Procédé de fabrication d'une antenne autoadhésive pour un système RFID, en particulier pour une étiquette RFID, l'antenne (1) étant constituée d'une feuille d'aluminium (7) de 1 µm - 20 µm d'épaisseur, en particulier d'environ 10 µm d'épaisseur, collée sur le recto d'un matériau adhésif (3) et estampée, le matériau adhésif (3) étant muni d'une couche adhésive autocollante (4) sur son verso, **caractérisé en ce que** des antennes individuelles (1) constituées d'une feuille d'aluminium (7) collée sur le recto d'un matériau adhésif (3) en forme de bande sont estampées, le matériau adhésif (3) présentant une couche adhésive autocollante (4) sur son verso et la grille estampée restante étant enlevée après l'estampage (15) avec le reste de la feuille d'aluminium, le procédé comportant les étapes suivantes :
1. On enlève une feuille d'aluminium (7) en forme de bande à un rouleau (6, 21),
2. la feuille d'aluminium (7) est munie sur son verso d'une couche adhésive (2),
3. on colle sur la couche adhésive (2) un matériau adhésif (3) en forme de bande, qui présente une couche adhésive autocollante (4) sur son verso,
4. ensuite, des antennes individuelles (1) sont estampées de la feuille d'aluminium (7), et
5. on enlève la grille estampée restante (15) en feuille d'aluminium (7).

2. Procédé selon la revendication 1, **caractérisé en ce qu'**un matériau adhésif (3) est collé au verso de la feuille d'aluminium (7), qui est couvert sur son verso d'un matériau support (5) collé de façon amovible et qui est estampé au moment de l'estampage de la la feuille d'aluminium (7) avec le matériau adhésif (3), de sorte qu'il reste des antennes (1) avec du matériau adhésif (2) estampé en forme d'antenne sur le matériau support (5).

3. Procédé selon la revendication 2, **caractérisé en ce que** la couche adhésive (2) est appliquée sous forme d'une colle de transfert sur le verso de la feuille d'aluminium (7).

4. Procédé selon une des revendications 1 à 3, **caractérisé en ce que** la couche adhésive (2) est d'abord appliquée sur un matériau support en forme de bande (18), puis déposée de ce dernier sur le verso de la feuille d'aluminium (7).

5. Procédé selon une des revendications 1 à 4, **caractérisé en ce qu'**un matériau autocollant (12) est appliqué sur le verso de la feuille d'aluminium avant l'estampage, la couche adhésive (2) étant appliquée sur la couche de couverture servant de matériau adhésif (3) du matériau autocollant (12) avant sa mise en contact avec la feuille d'aluminium (7).

6. Procédé selon une des revendications 1 à 5, **caractérisé en ce qu'**on utilise comme matériau de départ un matériau composite constitué d'une feuille d'aluminium (7) et d'un matériau support (20) qui est collé de façon amovible sur le verso de la feuille d'aluminium (7), la couche adhésive (2) restant sur la feuille d'aluminium (7) après l'enlèvement.
